# DEMANDE DE BREVET EUROPEEN

(11) **EP 3 342 709 A1**
(43) Date de publication de la demande: **04.07.2018**
(21) Numéro de dépôt: 17209968.1
(22) Date de dépôt: 22.12.2017
(51) Int. Cl.: B64D 13/02, B64D 13/06

(54) **PROCÉDÉ ET DISPOSITIF DE CONTRÔLE ENVIRONNEMENTAL D'AÉRONEF ALIMENTÉ PAR DE L'AIR DE PRÉLÈVEMENT À PRESSION INTERMÉDIAIRE**

(30) Priorité: 03.01.2017 FR 1750040
(71) Demandeur: Liebherr-Aerospace Toulouse SAS, 31200 Toulouse (FR)
(72) Inventeur: LAVERGNE, David, 31620 BOULOC (FR); ROCCHI, Jérôme, 31380 ROQUESERIERE (FR)
(74) Mandataire: Cabinet BARRE LAFORGUE & associés

(57) **Abrégé**

L'invention concerne un procédé et un dispositif de contrôle environnemental de cabine (11) d'aéronef. Un prélèvement d'air de compresseur (39) de moteur de l'aéronef à une unique valeur intermédiaire de pression est relié à une entrée d'un compresseur (48) d'un turbocompresseur (47) intermédiaire, une sortie d'air de ce compresseur (48) est reliée à une entrée d'une turbomachine (15) à cycle à air, une sortie de la turbomachine à cycle à air est reliée à la cabine (11), une entrée d'une turbine (49) du turbocompresseur (47) intermédiaire couplée au compresseur (48) reçoit de l'air en provenance de la cabine (11), et la pression de l'air délivré à la sortie d'air du compresseur (48) du turbocompresseur (47) intermédiaire est limitée à une valeur maximale prédéterminée.

## Description

L'invention concerne un procédé et un dispositif de contrôle environnemental de cabine d'aéronef. Elle s'étend à un aéronef comprenant un tel dispositif de contrôle environnemental de cabine.

Dans tout le texte, le terme « cabine » désigne tout espace intérieur d'aéronef dans lequel la pression et la température de l'air doivent être contrôlées. Il peut donc s'agir aussi bien d'une cabine pour passagers, que d'un cockpit, une soute, un espace de chargement de fret... L'expression « contrôle environnemental » désigne le fait de contrôler la température et la pression de l'air dans une cabine. Le terme « turbomachine » désigne toute machine tournante comprenant au moins un rotor et au moins une roue à aubes adaptée pour pouvoir être traversée par un fluide compressible tel que l'air, et en modifier au moins la pression ; il peut s'agir notamment d'un compresseur (axial et/ou radial ; ouvert (soufflante ou ventilateur) et/ou fermé (compresseur caréné) ; simple flux ou double flux ou multiflux) ; ou d'une turbine (axiale et/ou radial ; ouverte et/ou fermée) ; ou d'un turbocompresseur (axial et/ou radial ; simple flux ou double flux ou multiflux), ou autre.

Dans certains aéronefs (tels que ceux dédiés aux transports moyen-courriers, de poids, charge embarquée et coût relativement réduits) le contrôle environnemental des cabines est réalisé de façon entièrement pneumatique, c'est-à-dire par des systèmes fonctionnant à partir d'air de prélèvement sur les compresseurs des moteurs de propulsion de l'aéronef et/ou d'air extérieur (RAM) à pression dynamique lorsque l'aéronef est en vol. Le problème général qui se pose de longue date avec ce type de système de contrôle environnemental (ECS) est de minimiser le prélèvement d'air sur les compresseurs des moteurs, de façon à minimiser l'impact de ce prélèvement d'air sur la consommation et sur les performances des moteurs. Un autre problème consiste à pouvoir assurer le contrôle de la température et de la pression en cabine dans toutes les phases de fonctionnement de l'aéronef, y compris dans les phases de décollage, de descente, et au sol.

US2015/0065023 décrit un système de contrôle environnemental alimenté à partir d'air comprimé, dit air de prélèvement, prélevé sur un compresseur de moteur de l'aéronef. Un port de prélèvement d'air à haute pression alimente un échangeur de refroidissement qui alimente directement le système de contrôle environnemental. Une première partie d'un débit d'air issu d'un port de prélèvement d'air à basse pression alimente le compresseur d'un turbocompresseur intermédiaire, dont la sortie alimente le système de contrôle environnemental. Une deuxième partie du débit d'air issu du port de prélèvement d'air à basse pression alimente une turbine couplée mécaniquement au compresseur pour l'entraîner en rotation.

Un tel dispositif présente plusieurs inconvénients.

Tout d'abord, le compresseur du turbocompresseur intermédiaire sert à élever la pression de l'air de prélèvement issu du port à basse pression. Or, le fait d'alimenter la turbine par de l'air également issu du port à basse pression procure un couple d'entraînement insuffisant pour obtenir le taux de compression souhaité en sortie du compresseur.

En tout état de cause, le travail mécanique délivré par la turbine varie en fonction de la pression de l'air de prélèvement délivré par le port à basse pression, de sorte que les caractéristiques de l'air comprimé délivré par le turbocompresseur intermédiaire varient également de façon importante selon les différentes phases de vol de l'aéronef. En particulier, lors de la descente, la pression d'air délivré par un tel port à basse pression est faible et ne permet pas d'assurer la pressurisation de la cabine dans des conditions satisfaisantes à partir de l'air de prélèvement à basse pression. C'est la raison pour laquelle ce document prévoit également un port de prélèvement à haute pression.

Ainsi, ce dispositif nécessite encore deux ports de prélèvement d'air sur les compresseurs des moteurs : un port à haute pression et un port à basse pression. En outre, l'utilisation d'air de prélèvement issu du port à haute pression nécessite un échangeur de chaleur permettant d'assurer le refroidissement de l'air prélevé avant son exploitation par le système de contrôle environnemental ou par des dispositifs de dégivrage de voilure. Outre qu'il induit par principe une perte énergétique relativement importante, cet échangeur de chaleur est particulièrement lourd, complexe et volumineux, et ce d'autant plus que la température de l'air issu des ports à haute pression des moteurs de l'aéronef est en augmentation constante en fonction des perfectionnements apportés sur les moteurs pour augmenter leur taux de compression global au bénéfice d'une baisse de la consommation en carburant.

Il est à noter que sur certains aéronefs il peut être envisagé d'entraîner un compresseur intermédiaire non pas par une turbine à partir d'une partie du flux de prélèvement d'air, mais avec un moteur électrique (US2013/0040545). Cette solution n'est cependant envisageable que pour les aéronefs comprenant un réseau électrique avancé apte à délivrer une puissance électrique suffisante dans toutes les phases de vol.

Or, malgré la tendance prédominante à vouloir électrifier au maximum les avions de ligne, il reste une certaine catégorie d'aéronefs pour lesquels on souhaite au contraire conserver un fonctionnement sans nécessiter une installation électrique complexe et des dispositifs de refroidissement performants des électroniques de puissance. Sur ces aéronefs, on souhaite donc conserver une architecture pneumatique, c'est-à-dire l'utilisation d'air de prélèvement sur les moteurs pour le contrôle environnemental de cabine. Tel est le cas par exemple pour les aéronefs dont les moteurs sont des turbopropulseurs et/ou pour lesquels le plafond opérationnel est inférieur à 25000 pieds, c'est-à-dire environ 7650 m. Tel est également le cas pour certains aéronefs équipés de turboréacteurs traditionnels (notamment turboréacteurs multiflux et/ou à soufflante) et ayant un plafond opérationnel plus important, notamment jusqu'à 41000 pieds, c'est-à-dire environ 12500 m.

Néanmoins, il est également souhaitable simultanément de limiter l'impact de ce prélèvement sur la consommation en carburant, et de réduire autant que possible, voire de supprimer l'échangeur de chaleur pour le refroidissement de l'air de prélèvement.

L'entraînement d'un compresseur intermédiaire par un moteur de l'aéronef via une transmission mécanique présente également l'inconvénient d'augmenter la complexité du moteur et la consommation en carburant.

L'invention vise donc à pallier ces inconvénients en proposant un procédé et un dispositif de contrôle environnemental de cabine d'aéronef qui ne nécessitent ni moteur d'entraînement d'un compresseur, ni prélèvement d'air à haute pression sur un compresseur de moteur de l'aéronef, ni transmission mécanique d'entraînement d'un compresseur intermédiaire par un moteur de l'aéronef.

L'invention vise ainsi en particulier à permettre une réduction importante de la taille de l'échangeur de chaleur pour le refroidissement d'air de prélèvement d'un compresseur de moteur, voire une suppression de cet échangeur de refroidissement d'air de prélèvement.

L'invention vise en particulier à proposer un tel procédé et un tel dispositif de contrôle environnemental pouvant être alimentés à partir d'un unique port de prélèvement d'air à pression intermédiaire sur au moins un compresseur de moteur de l'aéronef.

L'invention vise également à proposer un aéronef présentant les mêmes avantages. Elle vise en particulier à proposer un aéronef dans lequel le contrôle environnemental peut être assuré de façon exclusivement pneumatique (le dispositif de contrôle environnemental pouvant être exempt de moteur électrique), et de consommation réduite en carburant.

Pour ce faire, l'invention concerne un procédé de contrôle environnemental de cabine d'aéronef dans lequel :
- un dispositif de prélèvement d'air comprimé d'au moins un compresseur de moteur de l'aéronef, est relié en communication de fluide à une entrée d'air d'un compresseur d'un turbocompresseur, dit turbocompresseur intermédiaire,
- une sortie d'air du compresseur du turbocompresseur intermédiaire est reliée en communication de fluide à une entrée d'air d'une turbomachine à cycle à air,
- une sortie d'air de la turbomachine à cycle à air est reliée en communication de fluide à la cabine pour pouvoir alimenter cette dernière par de l'air à pression et température contrôlées,
- une entrée d'air d'une turbine du turbocompresseur intermédiaire est reliée en communication de fluide à une source d'air comprimé, cette turbine étant couplée mécaniquement au compresseur de telle sorte que lorsque la turbine est alimentée en air comprimé, elle délivre un travail mécanique au compresseur,
caractérisé en ce que :
- le dispositif de prélèvement d'air comprimé est agencé pour pouvoir alimenter l'entrée d'air du compresseur du turbocompresseur intermédiaire par de l'air comprimé, dit air de prélèvement, prélevé d'au moins un compresseur de moteur de l'aéronef à partir d'un unique port de prélèvement d'air à une valeur intermédiaire de pression inférieure à une pression maximum délivrée par ce compresseur de moteur et supérieure à une pression minimum délivrée par ce compresseur de moteur,
- ladite source d'air comprimé reliée en communication de fluide à l'entrée d'air de la turbine du turbocompresseur intermédiaire comprend de l'air en provenance de la cabine,
- la pression de l'air délivré à l'entrée d'air de la turbomachine à cycle à air est limitée à une valeur maximale prédéterminée.

L'invention s'étend également à un dispositif de contrôle environnemental de cabine d'aéronef comprenant :
- un dispositif de prélèvement d'air comprimé d'au moins un compresseur de moteur de l'aéronef, ce dispositif de prélèvement d'air étant relié en communication de fluide à une entrée d'air d'un compresseur d'un turbocompresseur, dit turbocompresseur intermédiaire,
- une sortie d'air du compresseur du turbocompresseur intermédiaire reliée en communication de fluide à une entrée d'air d'une turbomachine à cycle à air,
- une sortie d'air de la turbomachine à cycle à air reliée en communication de fluide à la cabine pour pouvoir alimenter cette dernière par de l'air à pression et température contrôlées,
- une entrée d'air d'une turbine du turbocompresseur intermédiaire reliée en communication de fluide à une source d'air comprimé, cette turbine étant couplée mécaniquement au compresseur de telle sorte que lorsque la turbine est alimentée en air comprimé, elle délivre un travail mécanique au compresseur,
caractérisé en ce que :
- le dispositif de prélèvement d'air comprimé est agencé pour pouvoir alimenter l'entrée d'air du compresseur du turbocompresseur intermédiaire par de l'air comprimé, dit air de prélèvement, prélevé d'au moins un compresseur de moteur de l'aéronef à partir d'un unique port de prélèvement d'air à une valeur intermédiaire de pression inférieure à une pression maximum délivrée par ce compresseur de moteur et supérieure à une pression minimum délivrée par ce compresseur de moteur,
- ladite source d'air comprimé reliée en communication de fluide à l'entrée d'air de la turbine du turbocompresseur intermédiaire comprend de l'air en provenance de la cabine,
- il comporte un dispositif limiteur de pression adapté pour limiter la pression de l'air délivré à l'entrée d'air de la turbomachine à cycle à air à une valeur maximale prédéterminée.

Ainsi, l'invention permet d'une part d'assurer le fonctionnement du turbocompresseur intermédiaire dans toutes les phases de vol, d'autre part de s'affranchir de tout moteur électrique d'entraînement d'un compresseur intermédiaire, de l'utilisation d'air de prélèvement à haute pression pour le contrôle environnemental de la cabine, et de toute liaison mécanique entre le turbocompresseur intermédiaire et un moteur de l'aéronef.

Par ailleurs, dans certains modes de réalisation avantageux d'un procédé et d'un dispositif selon l'invention le dispositif de prélèvement d'air comprimé est aussi relié en communication de fluide directement à l'entrée d'air de la turbomachine à cycle à air par l'intermédiaire d'une conduite de dérivation en parallèle au compresseur du turbocompresseur intermédiaire, cette conduite de dérivation comprenant un clapet adapté pour alimenter ladite turbomachine à cycle à air directement par de l'air de prélèvement lorsque ladite valeur intermédiaire de pression est supérieure à une valeur minimale prédéterminée par ledit clapet, de sorte que le compresseur du turbocompresseur intermédiaire n'est alimenté en air de prélèvement que si ladite valeur intermédiaire de pression est inférieure à ladite valeur minimale prédéterminée. Ainsi, si ladite valeur intermédiaire de pression de l'air délivré par le port de prélèvement est inférieure à ladite valeur minimale prédéterminée, le turbocompresseur intermédiaire est actif et permet d'élever la pression de l'air à une valeur suffisante à l'entrée d'air de la turbomachine à cycle à air. Si ladite valeur intermédiaire de pression de l'air de prélèvement est au contraire supérieure à ladite valeur prédéterminée, le turbocompresseur intermédiaire n'est plus utile, l'air de prélèvement pouvant être directement alimenté à l'entrée d'air de la turbomachine à cycle à air par la conduite de dérivation.

L'entrée d'air de la turbine du turbocompresseur intermédiaire est alimentée au moins à partir d'air en provenance de la cabine. Rien n'empêche de prévoir dans certaines variantes de l'invention d'alimenter l'entrée d'air de la turbine du turbocompresseur intermédiaire par une autre source d'air comprimé disponible à bord de l'aéronef, par exemple par de l'air à pression atmosphérique prélevé à l'extérieur de l'aéronef (par exemple lorsque l'aéronef est au sol) et/ou par de l'air à pression dynamique (RAM) résultant du vol de l'aéronef si la pression de cet air est suffisante. Cela étant, dans certains modes de réalisation avantageux, l'entrée d'air de la turbine du turbocompresseur intermédiaire est alimentée exclusivement à partir d'air en provenance de la cabine.

L'air en provenance de la cabine peut être de l'air de recirculation, la sortie d'air de la turbine du turbocompresseur intermédiaire étant alors reliée à l'entrée de la cabine ou à une chambre de mélange permettant d'alimenter la cabine par de l'air à une pression et une température appropriées.

En variante ou en combinaison, au moins pour certaines phases de vol de l'aéronef, la sortie d'air de la turbine du turbocompresseur intermédiaire est reliée en communication de fluide à une sortie d'air à l'extérieur de l'aéronef de façon à rejeter l'air détendu à l'extérieur. Ainsi, on utilise au moins une partie de l'air à évacuer de la cabine pour le renouvellement d'air, pour entraîner la turbine du turbocompresseur intermédiaire. Dans certains modes de réalisation avantageux conformes à l'invention la turbine du turbocompresseur intermédiaire est alimentée exclusivement à partir d'un flux d'air à évacuer hors de la cabine en vue de son renouvellement, la sortie d'air de la turbine du turbocompresseur intermédiaire étant reliée en communication de fluide à une sortie d'air à l'extérieur de l'aéronef.

Dans certains modes de réalisation de l'invention, il pourrait être envisagé d'alimenter la turbomachine à cycle à air par de l'air de prélèvement à une pression différente de ladite valeur intermédiaire de pression, c'est-à-dire par par un port de prélèvement différent. Néanmoins, dans d'autres modes de réalisation avantageux de l'invention la turbomachine à cycle à air est reliée au dispositif de prélèvement d'air comprimé pour pouvoir recevoir de l'air de prélèvement à partir dudit unique port de prélèvement d'air, c'est-à-dire à une unique (mais variable) valeur intermédiaire de pression. Ainsi, dans ces modes de réalisation, l'ensemble du dispositif de contrôle environnemental est alimenté par de l'air de prélèvement uniquement à partir dudit unique port de prélèvement d'air à ladite valeur intermédiaire de pression.

Plus particulièrement, dans certains modes de réalisation de l'invention, le dispositif de prélèvement d'air comprimé comporte une unique vanne de prélèvement d'air d'au moins un compresseur de moteur de l'aéronef. Ainsi, on utilise une seule vanne de prélèvement d'air (d'au moins un compresseur d'au moins un moteur de l'aéronef, ou de plusieurs compresseurs de plusieurs moteurs de l'aéronef, voire de chaque compresseur de chaque moteur de l'aéronef) à ladite valeur intermédiaire de pression pour alimenter l'entrée d'air du compresseur du turbocompresseur intermédiaire, et, de préférence, pour alimenter l'ensemble du dispositif de contrôle environnemental selon l'invention. Dans un procédé et un dispositif selon l'invention, il n'est plus nécessaire de prévoir un prélèvement d'air à haute pression, ni un échangeur de chaleur de refroidissement correspondant, ce dernier pouvant être réduit d'autant en volume si de l'air de prélèvement à haute pression est encore nécessaire pour d'autres composants de l'aéronef, par exemple pour un dispositif de dégivrage pneumatique, voire supprimé si aucun autre composant de l'aéronef doit être alimenté en air de prélèvement, par exemple si tous les dispositifs de dégivrage de voilures de l'aéronef sont des dispositifs électriques.

Par ailleurs, chaque compresseur de moteur de l'aéronef comprenant au moins un étage basse pression, au moins un étage à pression intermédiaire et au moins un étage haute pression, ladite unique vanne de prélèvement d'air est agencée pour prélever de l'air de prélèvement d'un étage à pression intermédiaire. Ainsi, ladite valeur intermédiaire de pression correspond à une pression délivrée par un étage à pression intermédiaire d'un compresseur de moteur de l'aéronef.

Cette valeur intermédiaire de pression varie en fonction des conditions de vol entre une valeur minimale (en altitude ou en phase de descente de l'aéronef) qui est typiquement de l'ordre de 1,1.10⁵ Pa à 2.10⁵ Pa (valeur de pression absolue), à une valeur maximale (au décollage de l'aéronef) qui est typiquement de l'ordre de 8.10⁵ Pa à 10.10⁵ Pa (valeur de pression absolue).

Le dispositif limiteur de pression permet de limiter la valeur de la pression de l'air délivré à l'entrée d'air de la turbomachine à cycle à air indépendamment de ladite valeur intermédiaire de pression lorsque cette valeur intermédiaire de pression est inférieure à ladite valeur minimale prédéterminée par le clapet de la conduite de dérivation. Par exemple, ce dispositif limiteur de pression est adapté pour limiter la pression à l'entrée d'air de la turbomachine à cycle à air à une valeur maximale prédéterminée comprise entre 10⁵ Pa et 2.10⁵ Pa (pression relative par rapport à la pression atmosphérique extérieure), de préférence de l'ordre de 22 psig (151685 Pa), correspondant à une valeur maximale de pression absolue de l'ordre de 1,7.10⁵ Pa en altitude à 41 000 pieds (12 500 m) à 1,9.10⁵ Pa en altitude à 25 000 pieds (7650 m) et de l'ordre de à 2,6.10⁵ Pa au sol.

La limitation de la pression à l'entrée d'air de la turbomachine à cycle à air peut être obtenue de différentes façons.

Ainsi, dans certains modes de réalisation de l'invention cette limitation de pression peut être obtenue notamment par l'une au moins des actions suivantes :
- ajustement de la pression de l'air délivré à l'entrée d'air du compresseur du turbocompresseur intermédiaire ; cet ajustement peut être obtenu par une unité de commande commandant une vanne commandée ;
- ajustement du débit d'air délivré à l'entrée d'air du compresseur du turbocompresseur intermédiaire ; cet ajustement peut être obtenu par une unité de commande commandant une vanne commandée ; cet ajustement du débit par la vanne a pour conséquence de faire varier (et de limiter) la pression ;
- ajustement de la pression de l'air délivré à l'entrée d'air de la turbine du turbocompresseur intermédiaire ; cet ajustement peut être obtenu par une unité de commande commandant une vanne commandée ;
- ajustement du débit d'air délivré à l'entrée d'air de la turbine du turbocompresseur intermédiaire ; cet ajustement peut être obtenu par une unité de commande commandant une vanne commandée ; cet ajustement du débit par la vanne a pour conséquence de faire varier (et de limiter) la pression à l'entrée de la turbine ;
- ajustement de la pression de l'air délivré à la sortie du compresseur du turbocompresseur intermédiaire ; cet ajustement peut être obtenu par une unité de commande commandant une vanne commandée ;
- ajustement du débit d'air délivré à la sortie du compresseur du turbocompresseur intermédiaire ; cet ajustement peut être obtenu par une unité de commande commandant une vanne commandée ; cet ajustement du débit par la vanne a pour conséquence de faire varier (et de limiter) la pression à la sortie de cette vanne ;
- limitation de pression par un clapet limiteur de pression à fermeture automatique à la sortie du compresseur du turbocompresseur intermédiaire ;
- ajustement de la pression de l'air délivré à l'entrée d'air de la turbomachine à cycle à air ; cet ajustement peut être obtenu par une unité de commande commandant une vanne commandée ;
- ajustement du débit d'air délivré à l'entrée d'air de la turbomachine à cycle à air ; cet ajustement peut être obtenu par une unité de commande commandant une vanne commandée ; cet ajustement du débit par la vanne a pour conséquence de faire varier (et de limiter) la pression à l'entrée d'air de la turbomachine à cycle à air ;
- limitation de pression par un clapet limiteur de pression à fermeture automatique à l'entrée d'air de la turbomachine à cycle à air.

Ainsi, dans certains modes de réalisation d'un dispositif selon l'invention ledit dispositif limiteur de pression à l'entrée d'air de la turbomachine à cycle à air comporte une unité de commande d'au moins une vanne commandée. En particulier, cette vanne commandée peut être choisie parmi une vanne à l'entrée d'air du compresseur du turbocompresseur intermédiaire, une vanne à l'entrée d'air de la turbine du turbocompresseur intermédiaire -notamment une vanne d'ajustement du débit d'air en provenance de la cabine-, une vanne à la sortie du compresseur du turbocompresseur intermédiaire, et une vanne à l'entrée d'air de la turbomachine à cycle à air. Une telle vanne peut être pilotée en débit par l'unité de commande, l'ajustement du débit par la vanne ayant pour conséquence de faire varier (et de limiter) la pression à l'entrée d'air de la turbomachine à cycle à air. Rien n'empêche cependant de prévoir une telle vanne pilotée directement en pression par l'unité de commande, pour limiter la pression à l'entrée d'air de la turbomachine à cycle à air.

En particulier, la pression de l'air délivré à l'entrée d'air de la turbomachine à cycle à air peut être limitée par limitation de la pression du flux d'air délivré à la sortie d'air du compresseur du turbocompresseur intermédiaire. Autrement dit, ledit dispositif limiteur de pression est alors un limiteur de la pression du flux d'air à la sortie d'air du compresseur du turbocompresseur intermédiaire.

En outre, dans certains modes de réalisation particuliers cette pression du flux d'air délivré à la sortie d'air du compresseur du turbocompresseur intermédiaire peut être limitée par ajustement d'un débit et/ou de la pression de l'air délivré à une entrée d'air du turbocompresseur intermédiaire. Autrement dit, ledit dispositif limiteur de pression comporte une unité de commande d'au moins une vanne commandée à une entrée d'air du turbocompresseur intermédiaire.

Dans certains modes de réalisation avantageusement et selon l'invention ladite vanne commandée à une entrée d'air du turbocompresseur intermédiaire est choisie parmi une vanne à l'entrée d'air du compresseur du turbocompresseur intermédiaire et une vanne à l'entrée d'air de la turbine du turbocompresseur intermédiaire. Dans la première variante, la pression délivrée par le compresseur du turbocompresseur intermédiaire est limitée par un ajustement du débit et/ou de la pression de l'air de prélèvement reçu à l'entrée de ce compresseur (ladite unité de commande commandant une telle vanne contrôlant le flux d'air de prélèvement reçu à l'entrée du compresseur). Dans la deuxième variante, la pression délivrée par le compresseur du turbocompresseur intermédiaire est limitée par la vitesse du turbocompresseur intermédiaire déterminée par un ajustement du débit et/ou de la pression de l'air délivré par ladite source d'air comprimé à l'entrée d'air de la turbine du turbocompresseur intermédiaire, notamment par un ajustement du débit et/ou de la pression de l'air en provenance de la cabine (ladite unité de commande commandant une vanne contrôlant le flux d'air en provenance de la cabine).

L'invention s'applique en particulier à un dispositif de contrôle environnemental dans lequel :
- ladite turbomachine à cycle à air comprend au moins un turbocompresseur rotatif, dit turbocompresseur principal,
- ladite entrée d'air de la turbomachine à cycle à air est reliée en communication de fluide à une entrée d'air d'un compresseur du turbocompresseur principal,
- une sortie d'air du compresseur du turbocompresseur principal est reliée en communication de fluide par l'intermédiaire d'au moins un échangeur de chaleur à une entrée d'air d'une turbine du turbocompresseur principal couplée mécaniquement audit compresseur du turbocompresseur principal pour pouvoir lui délivrer un travail mécanique d'entraînement en rotation,
- la cabine est reliée (directement ou de préférence par l'intermédiaire d'une chambre de mélange) en communication de fluide à une sortie d'air de la turbine du turbocompresseur principal.

Comme indiqué ci-dessus, dans certains modes de réalisation de l'invention l'entrée d'air du compresseur du turbocompresseur principal est directement raccordée en communication de fluide à la sortie d'air du compresseur du turbocompresseur intermédiaire. Ainsi, dans ces modes de réalisation il n'est pas nécessaire de prévoir un échangeur de chaleur de refroidissement entre le dispositif de prélèvement d'air et l'entrée d'air du compresseur du turbocompresseur intermédiaire.

Par ailleurs, l'invention permet également d'envisager plusieurs variantes pour le contrôle de la pression dans la cabine. Le contrôle de la pression régnant dans la cabine est réalisée par un asservissement à partir d'une mesure de la pression régnant dans la cabine et d'un ajustement d'au moins un débit d'air entrant dans la cabine et/ou d'au moins un débit d'air sortant de la cabine.

Selon une première variante, la pression régnant dans la cabine est ajustée par ajustement du débit d'air rejeté à l'extérieur par une vanne commandée d'évacuation d'air à l'extérieur de la cabine, le débit d'air délivré à l'entrée de la cabine à partir de la sortie d'air de la turbine du turbocompresseur principal étant déterminé par une loi uniquement en fonction de l'altitude de l'aéronef. Dans cette première variante, l'asservissement prend également en compte le débit d'air rejeté à l'extérieur de la cabine par l'intermédiaire de la turbine du turbocompresseur intermédiaire, le cas échéant.

Selon une deuxième variante, la pression régnant dans la cabine est ajustée par ajustement du débit d'air délivré à l'entrée de la cabine à partir de la sortie d'air de la turbine du turbocompresseur principal (en général par l'intermédiaire d'une chambre de mélange). Ainsi, le dispositif selon l'invention comporte une vanne commandée d'ajustement du débit d'air délivré à l'entrée de la cabine. Dans cette deuxième variante le débit d'air rejeté à l'extérieur de la cabine peut être déterminé par un orifice calibré. L'air en provenance de la cabine alimentant l'entrée d'air de la turbine du turbocompresseur intermédiaire peut être prélevé sur le débit d'air évacué par ledit orifice calibré, ou, en variante, être indépendant de ce débit d'air évacué par ledit orifice calibré, c'est-à-dire s'ajouter à ce débit d'air. Il est à noter que cette deuxième variante est en particulier rendue possible par l'invention du fait que l'air de prélèvement alimentant le turbocompresseur principal provient d'un unique port de prélèvement à pression intermédiaire, l'air à la sortie de la turbine du turbocompresseur principal présentant donc une valeur de pression variant relativement peu.

L'invention s'étend également à un dispositif de contrôle environnemental caractérisé en ce qu'il est adapté pour la mise en oeuvre d'un procédé de contrôle environnemental selon l'invention.

L'invention s'étend également à un procédé de contrôle environnemental mis en oeuvre par un dispositif de contrôle environnemental selon l'invention.

L'invention concerne également un aéronef comprenant au moins un dispositif de contrôle environnemental de cabine caractérisé en ce que chaque dispositif de contrôle environnemental de cabine est un dispositif selon l'invention.

Dans certains modes de réalisation un aéronef selon l'invention comprenant des dispositifs de dégivrage est caractérisé en ce que l'intégralité des dispositifs de dégivrage sont des dispositifs de dégivrage à alimentation électrique, c'est-à-dire n'utilisent pas de l'air de prélèvement sur un compresseur de moteur de l'aéronef. Ainsi, le seul prélèvement d'air nécessaire sur un compresseur de moteur de l'aéronef peut être celui requis pour le dispositif de contrôle environnemental, à ladite valeur intermédiaire de pression.

L'invention s'applique en particulier avantageusement à un aéronef caractérisé par un plafond d'altitude de vol inférieur à 25000 pieds ou 7650 m. L'air de prélèvement à ladite valeur intermédiaire de pression présente alors une température qui est toujours inférieure à 250° C, permettant de supprimer tout échangeur de chaleur de refroidissement de l'air de prélèvement. Dans certains modes de réalisation un aéronef selon l'invention comprend au moins un turbopropulseur à titre de moteur.

L'invention s'applique cependant également à un aéronef présentant un plafond d'altitude de vol plus important, notamment jusqu'à 41000 pieds ou 12500 m et/ou comprenant au moins un turboréacteur autre qu'un turbopropulseur.

L'invention concerne également un procédé de contrôle environnemental de cabine d'aéronef, un dispositif de contrôle environnemental de cabine d'aéronef et un aéronef caractérisés en combinaison par tout ou partie des caractéristiques mentionnées ci-dessus ou ci-après.

D'autres buts, caractéristiques et avantages de l'invention apparaîtront à la lecture de la description suivante donnée à titre non limitatif et qui se réfère aux figures annexées dans lesquelles :
- la figure 1 est un schéma synoptique d'une première variante de réalisation d'un dispositif de contrôle environnemental selon l'invention mettant en oeuvre un procédé de contrôle environnemental selon l'invention dans un aéronef selon l'invention,
- les figures 2 et 3 sont des schémas similaires à la figure 1 illustrant respectivement deux autres variantes de réalisation de l'invention.

Un aéronef selon l'invention est par exemple un avion de ligne qui comprend au moins une cabine 11 de passagers, et est doté d'au moins un moteur 12 principal de propulsion de l'aéronef, par exemple un ou plusieurs turbopropulseur(s) ; et/ou un ou plusieurs turboréacteur(s), et d'au moins une unité 13 d'alimentation de puissance auxiliaire (APU) permettant de délivrer de la puissance électrique et de l'air comprimé lorsque l'aéronef est au sol et que le(s) moteur(s) 12 principal(aux) de l'aéronef est(sont) à l'arrêt.

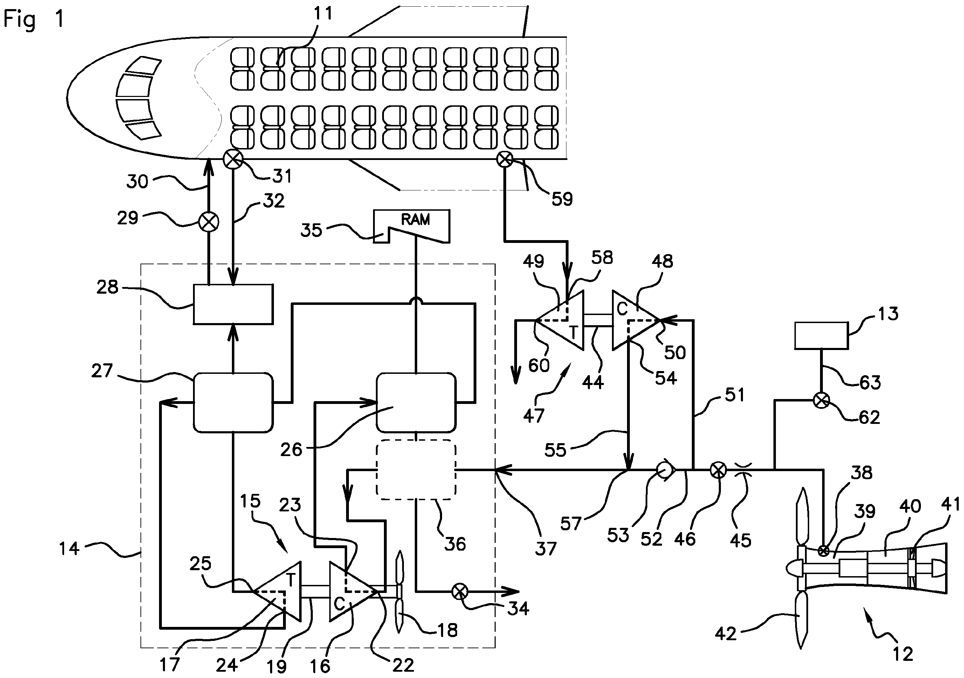

Le dispositif de contrôle environnemental selon l'invention comprend au moins un module 14 ou « pack » de conditionnement d'air (ECS) pouvant être formé d'un ensemble de composants renfermés dans un carter ou logement et présentant des ports de connexion d'entrée et de sortie d'air et un canal de circulation d'air dynamique RAM à travers un ou plusieurs échangeurs de chaleur. Un tel module 14 ECS peut faire l'objet de très nombreuses variantes de réalisation compatibles avec l'invention et n'est représenté que sous forme très schématisé figure 1. Il comporte au moins une turbomachine 15 à cycle à air qui, dans l'exemple, comprend un compresseur 16 rotatif, une turbine à 17 rotative, un ventilateur 18 assurant la circulation de l'air dynamique RAM à travers des échangeurs 26, 36 et un arbre 19 rotatif reliant le compresseur 16 à la turbine 17 et au ventilateur 18 et couplant mécaniquement ces trois éléments solidaires en rotation.

Le compresseur 16 de la turbomachine 15 à cycle à air comprend une entrée d'air 22 et une sortie d'air 23. La turbine 17 de la turbomachine 15 à cycle à air comprend une entrée d'air 24 et une sortie d'air 25. Au moins un premier circuit d'un échangeur 26 de chaleur intercalaire air/air est interposé entre la sortie d'air 23 du compresseur 16 et l'entrée d'air 24 de la turbine 17, de façon à refroidir l'air comprimé et réchauffé délivré par le compresseur 16 avant son introduction dans l'entrée d'air 24 de la turbine 17. À l'aval de l'échangeur 26 de chaleur, le flux d'air comprimé refroidi passe dans une boucle 27 d'extraction d'eau (qui comprend par exemple un réchauffeur formé d'un échangeur de chaleur air/air, un condenseur formé également d'un échangeur de chaleur air/air, et un extracteur d'eau). L'air froid détendu à la sortie de la turbine 17 passe à travers le condenseur de la boucle 27 d'extraction d'eau pour refroidir le flux d'air à l'amont de la turbine 17, puis alimente une chambre de mélange 28.

La chambre de mélange 28 est reliée à la cabine 11 par l'intermédiaire d'une conduite 30 et d'une vanne 29 commandée pour l'alimenter en air à pression et température contrôlées. Ainsi, la sortie 25 de la turbine 17 de la turbomachine 15 à cycle à air est reliée en communication de fluide à la cabine 11, par l'intermédiaire de la chambre de mélange 28, pour alimenter la cabine 11 par de l'air à pression et température contrôlées.

La chambre de mélange 28 peut recevoir de l'air de recirculation en provenance de la cabine 11 par l'intermédiaire d'une conduite 32 et d'une vanne 31 commandée, grâce à un ventilateur de recirculation (non représenté).

L'échangeur 26 de chaleur intercalaire comprend un deuxième circuit traversé par de l'air à pression dynamique RAM en provenance d'au moins une bouche 35 de prélèvement d'air à pression dynamique (RAM) pour le refroidissement de l'air comprimé réchauffé entre le compresseur 16 et la turbine 17.

Si nécessaire, un premier circuit d'un échangeur de chaleur 36 de refroidissement air/air est interposé entre une entrée d'air 37 du module 14 ECS et l'entrée d'air 22 du compresseur 16 de la turbomachine 15 à cycle à air, le deuxième circuit de cet échangeur de chaleur 36 étant traversé par de l'air à pression dynamique RAM délivré à la sortie du deuxième circuit d'échangeur 26 de chaleur intercalaire, de façon à refroidir l'air entre l'entrée d'air 37 du module 14 ECS et l'entrée d'air 22 du compresseur 16 de la turbomachine à cycle à air. La circulation d'air dans les deuxièmes circuits des échangeurs de chaleur 26, 36 est assurée par le ventilateur 18, ce débit d'air pouvant être régulé par une vanne 34 commandée.

Chaque échangeur de chaleur air/air permet un transfert de chaleur entre son premier circuit et son deuxième circuit, selon la différence de température des flux d'air traversant respectivement ces deux circuits.

Chaque moteur 12 de l'aéronef comprend au moins un compresseur 39 rotatif axial, une chambre de combustion 40, et au moins une turbine 41. Dans l'exemple représenté, le moteur 12 est un turbopropulseur double flux comprenant également une hélice 42. L'invention s'applique tout aussi bien à toute autre architecture de moteur 12 (turbopropulseur simple flux, turboréacteur simple ou double flux, avec ou sans soufflante, à turbomachine radiale et/ou axiale...) dès lors que le moteur 12 comprend au moins un compresseur d'air duquel peut être prélevé un débit d'air comprimé.

Au moins un moteur 12 de l'aéronef comprend une vanne 38 de prélèvement d'air comprimé à une valeur intermédiaire de pression entre la pression maximum délivrée par le compresseur 39 du moteur 12 immédiatement à l'amont de sa chambre de combustion 40 et la pression de l'air pénétrant dans le compresseur du moteur 12, correspondant à la pression dynamique RAM. Le dispositif de contrôle environnemental selon l'invention reçoit de l'air de prélèvement du moteur 12 à partir d'une seule vanne 38 de prélèvement d'air sur ce moteur 12, c'est-à-dire à chaque instant à une seule valeur de pression, qui correspond à ladite valeur intermédiaire de pression. Le dispositif de contrôle environnemental selon l'invention est donc alimenté en air prélevé sur au moins un moteur 12 à partir d'une unique vanne 38 de prélèvement d'air, à ladite valeur intermédiaire de pression, de ce moteur 12.

La position de la vanne 38 de prélèvement sur le compresseur 16 du moteur 12 (et donc ladite valeur intermédiaire de pression) est choisie de façon à minimiser la consommation en carburant du moteur 12, tout en optimisant le fonctionnement du dispositif de contrôle environnemental exclusivement à partir de cet air de prélèvement. Ainsi, le dispositif de contrôle environnemental selon l'invention peut être, comme dans l'exemple représenté et décrit, de type exclusivement pneumatique, et exempt de moteur électrique et d'alimentation électrique de puissance. Il ne nécessite une alimentation électrique que pour sa logique de commande (qui peut être formée d'une unité informatique de traitement de données numériques programmée de façon appropriée) et des différentes vannes commandées permettant son fonctionnement en fonction des besoins et des différentes phases de vol de l'aéronef. La logique de commande est en particulier adaptée pour contrôler la température et la pression de l'air à l'intérieur de la cabine 11, ainsi que son renouvellement, de façon connue en elle-même.

Cette valeur intermédiaire de pression varie en fonction des différentes phases de fonctionnement de l'aéronef, et est par exemple choisie de façon à être au minimum de l'ordre de 1,1.10⁵ Pa (valeur de pression absolue en altitude ou en phase de descente de l'aéronef) et au maximum de l'ordre de 10⁶ Pa (valeur de pression absolue lorsque chaque moteur 12 est à puissance maximum, notamment au décollage de l'aéronef).

La vanne 38 de prélèvement est reliée à l'entrée 37 d'air du module 14 ECS pour l'alimenter en air de prélèvement par l'intermédiaire successivement d'un Venturi constituant un capteur 45 de débit, d'une vanne 46 commandée permettant de contrôler le débit d'air fourni, et d'un dispositif de compression intermédiaire permettant, lorsque ladite valeur de pression intermédiaire est insuffisante pour alimenter le module 14 ECS, d'augmenter la pression de l'air délivré à l'entrée 37 du module 14 ECS.

L'unité 13 auxiliaire de puissance (APU) permet également , lorsque le(s) moteur(s) 12 principal(aux) de l'aéronef est(sont) à l'arrêt, de délivrer, à l'amont du capteur 45 de débit, de l'air comprimé à une valeur correspondant à ladite valeur intermédiaire de pression par l'intermédiaire d'une conduite 63 dotée d'une vanne 62 commandée.

Le dispositif de compression intermédiaire comprend un turbocompresseur 47 intermédiaire comportant un compresseur 48, et une turbine 49 couplée mécaniquement au compresseur 48 par un arbre 44 de telle sorte que lorsque la turbine 49 est alimentée en air comprimé, elle délivre un travail mécanique au compresseur 48. Le compresseur 48 comprend une entrée d'air 50 reliée à la sortie de la vanne 46 de contrôle de débit par une conduite 51 permettant d'alimenter le compresseur 48 en air de prélèvement.

La sortie de la vanne 46 de contrôle de débit est également reliée à l'entrée d'air 37 du module 14 ECS par une conduite 52 de dérivation en parallèle à la conduite 51 qui relie la sortie de la vanne 46 de contrôle de débit à l'entrée d'air 50 du compresseur 48 du turbocompresseur 47 intermédiaire. Cette conduite 52 de dérivation comporte un clapet 53 adapté pour alimenter l'entrée 37 d'air du module 14 ECS par de l'air de prélèvement directement issu de la sortie de la vanne 46 de contrôle de débit, et donc de la vanne 38 de prélèvement, lorsque la dite valeur intermédiaire de pression est supérieure à une valeur minimale prédéterminée par le clapet 53 si ce dernier est à fonctionnement automatique, ou par une condition fluidique (pression mesurée sur la vanne 38, ou sur la vanne 46, ou débit mesuré sur le débitmètre 45) si le clapet 53 est du type commandé.

Cette valeur minimale prédéterminée correspond à la valeur minimale de la pression à laquelle le module 14 ECS doit être alimenté pour pouvoir fonctionner dans des conditions appropriées et permettre d'une part la pressurisation de la cabine 11 en tant que de besoin, d'autre part le contrôle de la température au sein de la cabine 11. Cette valeur minimale prédéterminée est supérieure à la valeur minimale de la pression de l'air de prélèvement délivré par la vanne 38 de prélèvement. Elle est de préférence inférieure à la valeur maximum de la pression d'air de prélèvement délivré par la vanne 38 de prélèvement, de façon à permettre l'alimentation du module 14 ECS directement par l'air de prélèvement, sans compression intermédiaire, au moins dans certaines conditions de vol de l'aéronef, par exemple au décollage. Par exemple, cette valeur minimale prédéterminée est comprise entre 10⁵ Pa et 2.10⁵ Pa, de préférence, pour un pack de l'ordre de 22 psig (15 1685 Pa) (pression relative par rapport à la pression atmosphérique extérieure), soit une valeur minimale de pression absolue de l'ordre de 1,6.10⁵ Pa en altitude et de l'ordre de 2.10⁵ Pa au sol.

Lorsque ladite valeur intermédiaire de pression est supérieure à ladite valeur minimale prédéterminée, le clapet 53 de la conduite 52 de dérivation est ouvert, et le dispositif de contrôle environnemental fonctionne de façon traditionnelle, le débit d'air de prélèvement alimenté à l'entrée 37 du module 14 ECS étant contrôlé par la logique de commande par l'intermédiaire de la vanne 46 de contrôle de débit en fonction du débit mesuré par le capteur 45 de débit.

Le compresseur 48 du turbocompresseur 47 intermédiaire présente une sortie 54 reliée à la conduite 52 de dérivation à l'aval du clapet 53 par une conduite 55. La conduite 52 de dérivation et la conduite 55 de sortie du compresseur 48 se rejoignent en un noeud 57 relié à l'entrée 37 d'air du module 14 ECS.

La turbine 49 du turbocompresseur 47 intermédiaire présente une entrée d'air 58 alimentée à partir de la cabine 11 par l'intermédiaire d'une vanne 59 commandée, qui est une vanne d'évacuation d'air vicié vers l'extérieur de la cabine 11. Une telle vanne d'évacuation d'air vicié est en général prévue sur tous les aéronefs pour permettre le renouvellement de l'air dans la cabine 11 et le contrôle de la pression régnant dans la cabine. Son fonctionnement est commandé par la logique de commande de la pressurisation de la cabine 11 en fonction des différentes phases de vol de l'aéronef et de ses conditions d'utilisation, notamment du nombre de passagers à bord de la cabine 11.

Dans certaines variantes de réalisation, la vanne 59 commandée contrôlant le débit d'air alimenté à l'entrée de la turbine 49 du turbocompresseur 47 intermédiaire est la seule vanne d'évacuation d'air vicié hors de la cabine. Dans ce cas, la vanne 59 est commandée à la fois par la logique de commande de pressurisation de la cabine et par la logique de commande du module 14 ECS pour assurer simultanément la pressurisation et le contrôle de température de la cabine. Néanmoins, dans ces variantes, il peut arriver que le besoin de pressurisation de la cabine impose la fermeture de la vanne 59 tandis que la valeur intermédiaire de pression de l'air de prélèvement soit insuffisante, nécessitant l'entraînement du compresseur 48 pour alimenter le module 14 ECS.

Dans d'autres variantes de réalisation, la vanne 59 commandée est ajoutée à au moins une autre vanne d'évacuation d'air vicié permettant le contrôle de la pressurisation de la cabine.

Dans d'autres variantes de réalisation, la pressurisation de la cabine est assurée non pas par une vanne d'évacuation d'air vicié, mais par ajustement du débit d'air entrant dans la cabine, c'est-à-dire par la vanne 29 interposée entre la chambre 28 de mélange de la cabine 11, et par un orifice calibré laissant s'échapper un débit d'air prédéterminé hors de la cabine 11. Dans ces dernières variantes, l'asservissement de la pressurisation de la cabine prend en considération l'ouverture ou non de la vanne 59 commandée alimentant la turbine 49 du turbocompresseur 47 intermédiaire.

L'air vicié évacué de la cabine 11 par la vanne 59 d'évacuation est de l'air pressurisé, et est donc susceptible d'être détendu par la turbine 49 du turbocompresseur 47 intermédiaire, cette dernière présentant une sortie 60 d'air rejetant l'air détendu par la turbine 49 vers l'extérieur de l'aéronef.

Lorsque ladite valeur intermédiaire de pression est inférieure à ladite valeur minimale prédéterminée, la vanne 46 de contrôle de débit est totalement ouverte et le clapet 53 de la conduite 52 de dérivation est fermé. L'air délivré à la sortie de la vanne 46 de contrôle de débit est orienté à l'entrée 52 du compresseur 48 du turbocompresseur 47 intermédiaire, comprimé par ce compresseur 48 intermédiaire, et délivré à l'entrée 37 d'air du module 14 ECS.

La valeur de la pression de l'air délivré à l'entrée d'air 22 de la turbomachine à cycle à air, c'est-à-dire à l'entrée 37 d'air du module 14 ECS est limitée à une valeur maximale prédéterminée. En particulier, pour ce faire, la valeur de la pression de l'air délivré par le compresseur 48 du turbocompresseur 47 intermédiaire est limitée à une valeur maximale prédéterminée.

Dans une première variante de réalisation représentée figure 1, la logique de commande contrôle la pression de l'air délivré à la sortie 54 du compresseur 48 en ajustant la vitesse du compresseur 48 du turbocompresseur 47 intermédiaire, et ce grâce à la vanne 59 contrôlant le débit d'air d'évacuation en provenance de la cabine 11 et alimentant la turbine 49 du turbocompresseur 47 intermédiaire. La logique de commande met en oeuvre un asservissement de l'ouverture de la vanne 59 commandée en fonction de la valeur de la pression de l'air à la sortie du compresseur 48 et/ou en fonction du débit d'air de prélèvement fourni à ce compresseur 48 mesuré par le capteur 45 de débit. Dans cette première variante, la vanne 46 de contrôle de débit est totalement ouverte.

Dans une deuxième variante de réalisation qui correspond également au schéma de la figure 1, la logique de commande limite la pression de l'air délivré à la sortie 54 du compresseur 48 du turbocompresseur 47 intermédiaire en ajustant le débit d'air de prélèvement délivré par la vanne 46 de contrôle de débit à l'entrée du turbocompresseur 47 intermédiaire. La logique de commande met en oeuvre un asservissement de cette vanne 46 de contrôle de débit en fonction de la valeur de la pression de l'air à la sortie du compresseur 48 et/ou en fonction du débit d'air de prélèvement fourni à ce compresseur 48 mesuré par le capteur 45 de débit. Dans cette deuxième variante, la vanne 59 commandée alimentant la turbine 49 du turbocompresseur 47 intermédiaire est totalement ouverte.

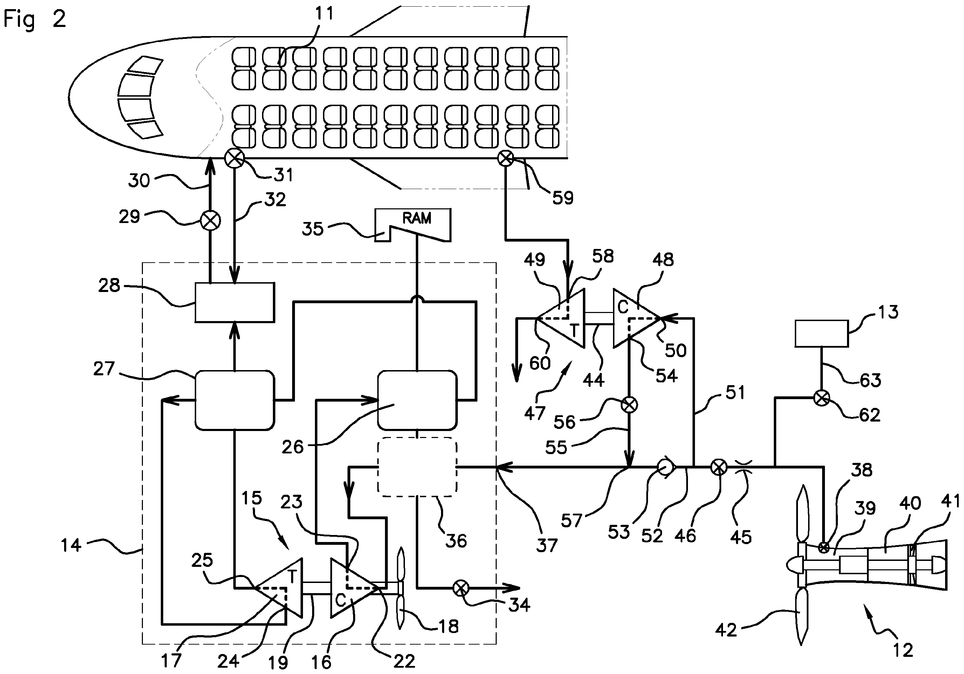

Dans une troisième variante de réalisation représentée figure 2, la conduite 55 reliant la sortie 54 du compresseur 48 du turbocompresseur 47 intermédiaire à la conduite 52 de dérivation à l'aval du clapet 53 comprenant une vanne 56 de contrôle de débit, et la logique de commande limite la pression de l'air délivré à l'entrée 37 du module ECS 14 en ajustant le débit d'air délivré par cette vanne 56 de contrôle du débit d'air délivré par le compresseur 48 du turbocompresseur intermédiaire 47, dans cette configuration les vannes 46 et 59 étant pleines ouvertes. La vanne 56 empêche également l'air arrivant au noeud 57 par la conduite 52 de dérivation de revenir vers la sortie 54 d'air du compresseur 48 du turbocompresseur intermédiaire lorsque le clapet 53 de la conduite 52 de dérivation est ouvert.

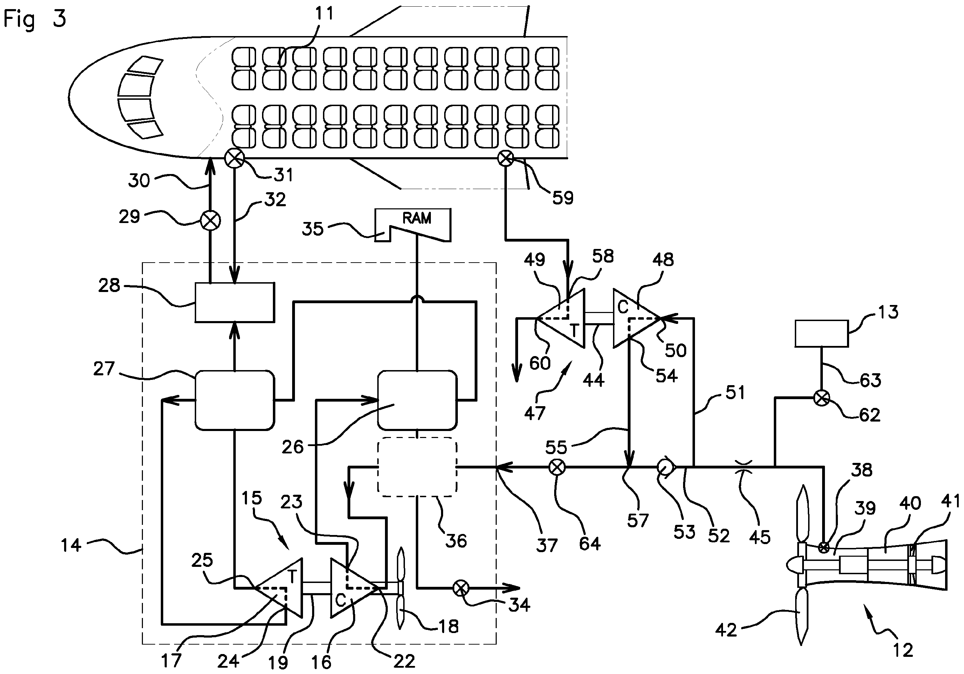

Dans une quatrième variante de réalisation représentée figure 3, une vanne 64 de contrôle de débit est placée immédiatement à l'amont de l'entrée 37 du module ECS 14, à l'aval du noeud 57 auquel se rejoignent la conduite 55 de sortie du compresseur 48 du turbocompresseur 47 intermédiaire et la conduite 52 de dérivation, et la logique de commande limite la pression de l'air délivré à l'entrée 37 du module ECS 14, en ajustant le débit d'air délivré par cette vanne 64 de contrôle du débit d'air.

Cette valeur maximale prédéterminée de la pression à la sortie 54 du compresseur 48 correspond à la valeur maximale d'alimentation du module 14 ECS pour un fonctionnement approprié de ce dernier. Par exemple, cette valeur maximale prédéterminée est comprise entre 10⁵ Pa et 2.10⁵ Pa (pression relative par rapport à la pression atmosphérique extérieure), de préférence de l'ordre de 22 psig (151685 Pa), correspondant à une valeur maximale de pression absolue de l'ordre de 1,7.10⁵ Pa en altitude à 41 000 pieds (12 500 m) à 1,9.10⁵ Pa en altitude à 25 000 pieds (7650 m). En effet, la valeur de la pression délivrée par le compresseur 48 du turbocompresseur 47 intermédiaire peut varier dans des limites qui sont difficilement prévisibles, en fonction des variations de pression de l'air de prélèvement alimenté à l'entrée d'air 50 du compresseur 48, et de l'alimentation de la turbine 49 du turbocompresseur 47 intermédiaire, cette dernière dépendant de l'utilisation de l'aéronef, et par exemple, dans certaines variantes de réalisation, du nombre de passagers dans la cabine 11.

Un aéronef selon l'invention peut comporter un seul moteur 12 et un seul dispositif de contrôle environnemental selon l'invention. Un aéronef selon l'invention peut aussi comporter en variantes plusieurs moteurs 12. Rien n'empêche de prévoir qu'un même dispositif de contrôle environnemental selon l'invention soit alimenté à partir de plusieurs moteurs 12 de l'aéronef, chacun de ces moteurs 12 étant alors doté d'une seule vanne 38 de prélèvement d'air à ladite valeur intermédiaire de pression. Typiquement, un aéronef comprend au moins deux moteurs 12, au moins un à bâbord, au moins un à tribord, et deux dispositifs de contrôle environnemental selon l'invention, l'un à bâbord, l'autre à tribord. Chaque dispositif de contrôle environnemental selon l'invention est alimenté en air de prélèvement à partir d'au moins un moteur 12 situé du même côté de l'aéronef, de préférence à partir de chacun des moteurs 12 situés du même côté de l'aéronef. Les conduites issues des différentes vannes 38 de prélèvement d'air des différents moteurs 12 alimentant un même dispositif de contrôle environnemental selon l'invention se rejoignent en un noeud à l'amont du capteur 45 de débit.

Grâce à la récupération de la pression de l'air vicié évacué hors de la cabine en vue de son renouvellement pour l'entraînement de la turbine 49 du turbocompresseur 47 intermédiaire, l'invention permet de ne prévoir qu'un seul prélèvement d'air sur chaque compresseur de chaque moteur 12 de l'aéronef pour l'alimentation en air comprimé de chaque dispositif de contrôle environnemental selon l'invention. Il en résulte de nombreux avantages, notamment une réduction de la consommation en carburant et la possibilité de supprimer l'échangeur 36 de chaleur de refroidissement d'air de prélèvement pour les aéronefs volant à une altitude suffisamment faible, notamment inférieure à 25000 pieds, c'est-à-dire environ 7650 m, et dans lesquels le dégivrage de la voilure est réalisé exclusivement par des dispositifs électriques de dégivrage (et non à partir d'air de prélèvement sur les moteurs 12 de l'aéronef). Pour les aéronefs volant à une altitude supérieure, l'échangeur 36 de chaleur peut en tout état de cause être réduit considérablement.

L'invention peut faire l'objet de nombreuses autres applications et variantes de réalisation par rapport au mode de réalisation représenté sur la figure et décrit ci-dessus.

En particulier, en variante ou en combinaison, la pression de l'air à l'entrée d'air de la turbomachine à cycle à air peut être limitée par un clapet limiteur de pression à la sortie du compresseur 48 du turbocompresseur 47 intermédiaire et/ou par un clapet limiteur de pression à l'entrée d'air 22 de la turbomachine à cycle à air et/ou par une vanne de contrôle du débit d'air délivré à l'entrée 37 d'air du module 14 ECS et/ou par une vanne commandée de contrôle du débit d'air délivré à la sortie du compresseur 48 du turbocompresseur 47 intermédiaire. Chacune des vannes commandées peut être choisie parmi une vanne électrique (contrôlée par des signaux électriques et actionnée par un actionneur électrique), une vanne électropneumatique (contrôlée par des signaux électriques et actionnée par un actionneur pneumatique), et une vanne pneumatique (contrôlée et actionnée par voie pneumatique).

En outre, si le procédé et le dispositif de contrôle environnemental selon l'invention peuvent être exclusivement pneumatiques, rien n'empêche de prévoir également un moteur électrique d'entraînement de l'arbre 19 de la turbomachine à cycle à air 15 et/ou un moteur électrique d'entraînement de l'arbre 44 du turbocompresseur 47 intermédiaire. En outre, la logique de commande peut faire l'objet de toutes variantes appropriées. La cabine 11 peut être une cabine de passagers ou toute autre cabine d'aéronef (cockpit, soute, espace de chargement de fret...).

## Revendications

1. Procédé de contrôle environnemental de cabine (11) d'aéronef dans lequel :
- un dispositif de prélèvement d'air comprimé d'au moins un compresseur (39) de moteur de l'aéronef, est relié en communication de fluide à une entrée d'air d'un compresseur (48) d'un turbocompresseur, dit turbocompresseur (47) intermédiaire,
- une sortie d'air du compresseur (48) du turbocompresseur (47) intermédiaire est reliée en communication de fluide à une entrée d'air (22) d'une turbomachine (15) à cycle à air,
- une sortie d'air de la turbomachine (15) à cycle à air est reliée en communication de fluide à la cabine (11) pour pouvoir alimenter cette dernière par de l'air à pression et température contrôlées,
- une entrée d'air d'une turbine (49) du turbocompresseur (47) intermédiaire est reliée en communication de fluide à une source d'air comprimé, cette turbine (49) étant couplée mécaniquement au compresseur (48) de telle sorte que lorsque la turbine (49) est alimentée en air comprimé, elle délivre un travail mécanique au compresseur (48),
**caractérisé en ce que** :
- le dispositif de prélèvement d'air comprimé est agencé pour pouvoir alimenter l'entrée d'air du compresseur (48) du turbocompresseur (47) intermédiaire par de l'air comprimé, dit air de prélèvement, prélevé d'au moins un compresseur (39) de moteur (12) de l'aéronef à partir d'un unique port de prélèvement d'air à une valeur intermédiaire de pression inférieure à une pression maximum délivrée par ce compresseur (39) de moteur et supérieure à une pression minimum délivrée par ce compresseur (39) de moteur,
- ladite source d'air comprimé reliée en communication de fluide à l'entrée d'air de la turbine (49) du turbocompresseur (47) intermédiaire comprend de l'air en provenance de la cabine (11),
- la pression de l'air délivré à l'entrée (22) d'air de la turbomachine à cycle à air est limitée à une valeur maximale prédéterminée en fonction des phases et conditions de vol.

2. Procédé selon la revendication 1 **caractérisé en ce que** le dispositif de prélèvement d'air comprimé est aussi relié en communication de fluide directement à l'entrée d'air de la turbomachine (15) à cycle à air par l'intermédiaire d'une conduite (52) de dérivation en parallèle au compresseur (48) du turbocompresseur (47) intermédiaire, cette conduite (52) de dérivation comprenant un clapet (53) adapté pour alimenter ladite turbomachine (15) à cycle à air directement par de l'air de prélèvement lorsque ladite valeur intermédiaire de pression est supérieure à une valeur minimale prédéterminée par ledit clapet (53), de sorte que le compresseur (48) du turbocompresseur (47) intermédiaire n'est alimenté en air de prélèvement que si ladite valeur intermédiaire de pression est inférieure à ladite valeur minimale prédéterminée.

3. Procédé selon l'une quelconque des revendications 1 ou 2 **caractérisé en ce que** la sortie d'air de la turbine (49) du turbocompresseur (47) intermédiaire est reliée en communication de fluide à une sortie d'air à l'extérieur de l'aéronef de façon à rejetter l'air détendu à l'extérieur.

4. Procédé selon l'une des revendications 1 à 3 **caractérisé en ce que** la pression de l'air délivré à l'entrée d'air (22) de la turbomachine à cycle à air est limitée par ajustement d'au moins un débit d'air choisi parmi un débit d'air délivré à la sortie d'air du compresseur du turbocompresseur (47) intermédiaire, un débit d'air délivré à l'entrée d'air du compresseur du turbocompresseur (47) intermédiaire et un débit d'air délivré à l'entrée d'air de la turbine du turbocompresseur (47) intermédiaire.

5. Procédé selon l'une des revendications 1 à 4 **caractérisé en ce que** :
- ladite turbomachine (15) à cycle à air comprenant au moins un turbocompresseur rotatif, dit turbocompresseur principal,
- ladite entrée d'air de la turbomachine (15) à cycle à air étant une entrée (22) d'air d'un compresseur (16) du turbocompresseur principal, une sortie d'air du compresseur (16) du turbocompresseur principal est reliée en communication de fluide par l'intermédiaire d'au moins un échangeur (26) de chaleur à une entrée d'air d'une turbine (17) du turbocompresseur principal couplée mécaniquement audit compresseur (16) du turbocompresseur principal pour pouvoir lui délivrer un travail mécanique d'entraînement en rotation,
- la cabine (11) étant reliée en communication de fluide à une sortie d'air de la turbine (17) du turbocompresseur principal.
- l'entrée d'air (22) du compresseur (16) du turbocompresseur principal est directement raccordée en communication de fluide à la sortie d'air du compresseur (48) du turbocompresseur (47) intermédiaire.

6. Procédé selon la revendication 5 **caractérisé en ce que** la pression régnant dans la cabine (11) est ajustée par ajustement d'un débit d'air délivré à l'entrée de la cabine (11) à partir de la sortie d'air de la turbine (17) du turbocompresseur principal.

7. Dispositif de contrôle environnemental de cabine (11) d'aéronef comprenant :
- un dispositif de prélèvement d'air comprimé d'au moins un compresseur (39) de moteur de l'aéronef, ce dispositif de prélèvement d'air étant relié en communication de fluide à une entrée d'air d'un compresseur (48) d'un turbocompresseur, dit turbocompresseur (47) intermédiaire,
- une sortie d'air du compresseur (48) du turbocompresseur (47) intermédiaire reliée en communication de fluide à une entrée d'air (22) d'une turbomachine (15) à cycle à air,
- une sortie d'air de la turbomachine (15) à cycle à air reliée en communication de fluide à la cabine (11) pour pouvoir alimenter cette dernière par de l'air à pression et température contrôlées,
- une entrée d'air d'une turbine (49) du turbocompresseur (47) intermédiaire reliée en communication de fluide à une source d'air comprimé, cette turbine (49) étant couplée mécaniquement au compresseur (48) de telle sorte que lorsque la turbine (49) est alimentée en air comprimé, elle délivre un travail mécanique au compresseur (48),
**caractérisé en ce que** :
- le dispositif de prélèvement d'air comprimé est agencé pour pouvoir alimenter l'entrée d'air du compresseur (48) du turbocompresseur (47) intermédiaire par de l'air comprimé, dit air de prélèvement, prélevé d'au moins un compresseur (39) de moteur de l'aéronef à partir d'un unique port de prélèvement d'air à une valeur intermédiaire de pression inférieure à une pression maximum délivrée par ce compresseur (39) de moteur et supérieure à une pression minimum délivrée par ce compresseur (39) de moteur,
- ladite source d'air comprimé reliée en communication de fluide à l'entrée d'air de la turbine (49) du turbocompresseur (47) intermédiaire comprend de l'air en provenance de la cabine (11),
- il comporte un dispositif limiteur de pression adapté pour limiter la pression de l'air délivré à l'entrée d'air (22) de la turbomachine à cycle à air à une valeur maximale prédéterminée.

8. Dispositif selon la revendication 7 **caractérisé en ce que** le dispositif de prélèvement d'air comprimé est aussi relié en communication de fluide directement à l'entrée d'air de la turbomachine (15) à cycle à air par l'intermédiaire d'une conduite (52) de dérivation en parallèle au compresseur (48) du turbocompresseur (47) intermédiaire, cette conduite (52) de dérivation comprenant un clapet (53) adapté pour alimenter ladite turbomachine (15) à cycle à air directement par de l'air de prélèvement lorsque ladite valeur intermédiaire de pression est supérieure à une valeur minimale prédéterminée par ledit clapet, de sorte que le compresseur (48) du turbocompresseur (47) intermédiaire n'est alimenté en air comprimé de prélèvement que si ladite valeur intermédiaire de pression est inférieure à ladite valeur minimale prédéterminée.

9. Dispositif selon l'une quelconque des revendications 7 ou 8 **caractérisé en ce que** la sortie d'air de la turbine (49) du turbocompresseur (47) intermédiaire est reliée en communication de fluide à une sortie d'air à l'extérieur de l'aéronef de façon à rejeter l'air détendu à l'extérieur.

10. Dispositif selon l'une des revendications 7 à 9 **caractérisé en ce que** ledit dispositif limiteur de pression comporte une unité de commande d'au moins une vanne (59, 46) commandée à l'amont de l'entrée (37) d'air de la turbomachine à cycle à air.

11. Dispositif selon la revendication 10 **caractérisé en ce que** ladite vanne (46, 59) commandée est choisie parmi une vanne (46) à l'entrée d'air du compresseur du turbocompresseur (47) intermédiaire, une vanne (59) à l'entrée d'air de la turbine du turbocompresseur (47) intermédiaire, une vanne à la sortie du compresseur du turbocompresseur intermédiaire, une vanne à l'entrée d'air (22) de la turbomachine à cycle à air.

12. Dispositif selon l'une des revendications 7 à 11 **caractérisé en ce que** :
- ladite turbomachine (15) à cycle à air comprend au moins un turbocompresseur rotatif, dit turbocompresseur principal,
- ladite entrée d'air (22) de la turbomachine (15) à cycle à air est reliée en communication de fluide à une entrée d'air d'un compresseur (16) du turbocompresseur principal,
- une sortie d'air du compresseur (16) du turbocompresseur principal est reliée en communication de fluide par l'intermédiaire d'au moins un échangeur (26) de chaleur à une entrée d'air d'une turbine (17) du turbocompresseur principal couplée mécaniquement audit compresseur (16) du turbocompresseur principal pour pouvoir lui délivrer un travail mécanique d'entraînement en rotation,
- la cabine (11) est reliée en communication de fluide à une sortie d'air de la turbine (17) du turbocompresseur principal,
- l'entrée d'air du compresseur (16) du turbocompresseur principal est directement raccordée en communication de fluide à la sortie d'air du compresseur (48) du turbocompresseur (47) intermédiaire.

13. Aéronef comprenant au moins un dispositif de contrôle environnemental de cabine **caractérisé en ce que** chaque dispositif de contrôle environnemental de cabine est un dispositif selon l'une des revendications 7 à 12.

14. Aéronef selon la revendication 13 comprenant des dispositifs de dégivrage **caractérisé en ce que** l'intégralité des dispositifs de dégivrage sont des dispositifs à alimentation électrique.

15. Aéronef selon l'une des revendications 13 ou 14 **caractérisé en ce qu'**il comprend au moins un turbopropulseur à titre de moteur (12).
